# NEUE EUROPÄISCHE PATENTSCHRIFT

(11) **EP 1 106 915 B2**
(45) Veröffentlichungstag und Bekanntmachung des Hinweises auf die Entscheidung über den Einspruch: **24.06.2015**
(45) Hinweis auf die Patenterteilung: 25.09.2002
(21) Anmeldenummer: 00126263.3
(22) Anmeldetag: 01.12.2000
(51) Int. Cl.: F21V 8/00

(54) **Anordnung von lichtstrahlenden plattenförmigen Elementen**
Flat luminous elements system
Système à éléments plats lumineux

(30) Priorität: 09.12.1999 DE 29921689 U; 25.08.2000 DE 10041850
(43) Veröffentlichungstag der Anmeldung: 13.06.2001
(73) Patentinhaber: Koninklijke Philips N.V., 5656 AE Eindhoven (NL)
(72) Erfinder: Koninklijke Philips N.V., 5656 AE Eindhoven (NL)
(74) Vertreter: Fritz & Brandenburg Patentanwälte

(56) Entgegenhaltungen:
- EP-A1- 0 403 764
- DE-A- 19 755 658
- DE-A1- 19 644 875
- DE-U1- 9 105 201
- GB-A- 2 241 056

## Beschreibung

Die vorliegende Erfindung betrifft eine Anordnung von lichtabstrahlenden plattenförmigen Elementen, bei der wenigstens einem plattenförmigen Element wenigstens ein Leuchtmittel zugeordnet ist, welches von der Stirnseite her Licht in das plattenförmige Element hinein abstrahlt und dieses Licht als Streulicht über die Fläche der Platte im rechten Winkel zur Einstrahlrichtung abgegeben wird.

Lichtabstrahlende plattenförmige Elemente der vorgenannten Art, bei denen zum Beispiel über Leuchtstofflampen, LED's oder andere Leuchtmittel über die Stirnseite, das heißt die Kante der Platte in die Platte eingestrahlt wird und dann das Licht über die Fläche der Platte, also senkrecht zur Einstrahlrichtung abgestrahlt wird, sind als solche aus dem Stand der Technik bekannt. Meistens werden diese plattenförmigen Elemente für beleuchtete Werbedisplays eingesetzt, bei denen sich zum Beispiel auf der flächigen Seite ein Bild, zum Beispiel ein Plakat, und/oder Schriftinformation befindet, die dann hinterleuchtet wird. Dadurch, daß die Lichteinstrahlung von der Stirnseite (Kantenseite) des plattenförmigen Elements her erfolgt, lassen sich diese Werbedisplays sehr flach bauen.

Im Bereich der allgemeinen Beleuchtung von Räumen in Gebäuden sind sogenannte Lichtdecken bekannt, das heißt Deckeneinbauleuchten, die in einer größeren Anzahl rasterförmig meist in Längs- und Querreihen angeordnet sind und bei denen das Leuchtmittel, zum Beispiel Leuchtstoffröhren, oberhalb von lichtdurchlässigen Platten angeordnet ist, so dass sich die gesamte Raumdecke oder Teile davon flächig beleuchten lassen. Bei diesen Lichtdecken ist es bislang zur Erzielung einer gleichmäßigen als angenehm empfundenen Beleuchtungswirkung notwendig, das Leuchtmittel, das heißt meist Leuchtstoffröhren in einem ausreichenden Abstand oberhalb der lichtdurchlässigen Platten anzuordnen. Dadurch wird ein Schattenwurf vermieden und die einzelne Leuchtstofflampe ist als Lichtquelle für den Betrachter von unten her nicht sichtbar. Es ist also für den Abstand zwischen dem Leuchtmittel und der lichtdurchlässigen Platte notwendig, eine sogenannte Streutiefe einzuhalten. Um dies zu gewährleisten, werden die lichtdurchlässigen Platten durch Abhängevorrichtungen von der eigentlichen Raumdecke, die eine feste Decke zum Beispiel aus Beton ist, abgehängt und das Leuchtmittel wird zwischen der festen Raumdecke und mit ausreichendem Abstand oberhalb der lichtdurchlässigen Platte befestigt. In der Regel haben solche Deckeneinbauleuchtensysteme insgesamt eine Einbautiefe gerechnet von der festen Raumdecke aus von etwa 25cm oder mehr. Dies bedeutet, daß man relativ viel Raum verliert beim Einbau dieser herkömmlichen Lichtdeckensysteme.

Im Bereich von Gebäudewänden bzw. -fassaden sind lichtdurchlässige Anordnungen, z.B. Glasfassaden bekannt, die jedoch nicht gleichzeitig beleuchtbar sind.

Die Aufgabe der vorliegenden Erfindung besteht demgegenüber darin, eine Anordnung von lichtabstrahlenden plattenförmigen Elementen für Raumwände, Gebäudewände beziehungsweise Gebäudefassaden zu schaffen, die mit einer geringen Einbautiefe auskommt.

Die Lösung dieser Aufgabe liefert eine erfindungsgemäße Anordnung von lichtabstrahlenden plattenförmigen Elementen mit den Merkmalen des Hauptanspruchs.

Erfindungsgemäß wird ein Leuchtmittel verwendet, welches einem plattenförmigen Element zugeordnet ist und von der Stirnseite her Licht in das plattenförmige Element hinein abstrahlt, wobei das Licht aber als Streulicht über die Fläche der Platte im rechten Winkel zur Einstrahlrichtung abgegeben wird. Die plattenförmigen Elemente, in die das Licht eingestrahlt wird, geben das Licht im rechten Winkel zur Einstrahlrichtung d.h. nach innen in das Gebäude bzw. den Raum hin ab und die plattenförmigen Elemente bilden selbst die Raumwand, Gebäudewand beziehungsweise Gebäudefassade. Dadurch hat der Betrachter den Eindruck einer flächigen gleichmäßig lichtabgebenden Raumwand oder Gebäudewand/fassade. Das Leuchtmittel befindet sich nicht mit Abstand vor dem plattenförmigen Element sondern neben diesem in gleicher Höhe und strahlt in die Stirnseite (Kante) des plattenförmigen Elements ein. Dadurch ist es nicht notwendig, den zuvor genannten Streulichtabstand einzuhalten, um das Leuchtmittel für den Betrachter innerhalb oder außerhalb des Raumes beziehungsweise Gebäudes unsichtbar zu machen. Es wird also ganz erheblich die Einbautiefe reduziert. Die Einbautiefe lässt sich auf nur wenige Zentimeter reduzieren je nach Stärke der verwendeten plattenförmigen Elemente und nach Art des Leuchtmittels.

Besonders vorteilhaft ist es, dass gemäß der erfindungsgemäßen Aufgabenlösung die plattenförmigen Elemente selbst bei ausgeschaltetem Leuchtmittel in Lichtabstrahlrichtung für natürliches Licht (zum Beispiel Tageslicht) durchlässig sind. Bei dieser bevorzugten Lösung kann man tagsüber die Leuchtmittel ausschalten, und wenn es sich zum Beispiel um eine Gebäudeaußenwand handelt, ist in diesem Fall vor den plattenförmigen Elementen keine feste Wand, wie zum Beispiel eine Betonwand, aus lichtundurchlässigem Material mehr vorhanden, sondern die Wand aus den lichtdurchlässigen plattenförmigen Elementen wirkt dann wie eine Glaswand und das natürliche Licht kann genutzt werden. Dieser Vorteil ist auch dann verwirklichbar, wenn es sich bei der Wand aus den erfindungsgemäßen plattenförmigen Elementen um eine Zwischenwand eines Gebäudes handelt und sich davor ein Raum befindet, der entweder von künstlichem Licht oder natürlichem Licht beleuchtet wird. Dieses kann dann ebenfalls durch die Wand aus den erfindungsgemäßen plattenförmigen Elementen hindurchgeleitet werden, vorausgesetzt, daß eine solche Wand die notwendigen statischen Bedingungen erfüllt. Es handelt sich dann also um eine tagsüber bei ausreichendem Licht quasi gläserne Raumwand, die abends nach Einschalten des oder der Leuchtmittel(s) als beleuchtete Lichtwand dient. Dabei können die Übergänge zwischen für natürliches Licht durchlässiger Raumwand/Gebäudewand und künstlich beleuchteter Lichtwand oder Lichtfassade quasi fließend gestaltet werden durch eine entsprechende Helligkeitssteuerung der Leuchtmittel, so daß sich natürliches durchfallendes Licht und künstliches senkrecht zur Einstrahlrichtung abgestrahltes Licht addieren.

Die erfindungsgemäße Aufgabenlösung sieht vor, daß wenigstens eines der plattenförmigen Elemente farbiges Licht abgibt. Auf diese Weise können weiße und farbige plattenförmige Elemente kombiniert werden, was eine Vielzahl interessanter Gestaltungsmöglichkeiten zulässt.

Die für eine erfindungsgemäße Anordnung verwendbaren plattenförmigen Elemente können beispielsweise im wesentlichen Acrylplatten sein, die an der lichtabgebenden Seite (Flachseite) mit einem Punktraster bedruckt sind.

Als Leuchtmittel für eine erfindungsgemäße Anordnung von lichtabstrahlenden plattenförmigen Elementen kommen LED's (Leuchtdioden) in Betracht, aber auch beispielsweise faseroptische Bauelemente können verwendet werden, die jeweils neben den plattenförmigen Elementen angeordnet sind und von deren Kantenseite (Stirnseite) her einstrahlen.

Die erfindungsgemäße Aufgabenlösung sieht vor, daß die lichtabstrahlenden plattenförmigen Elemente in ein- oder mehrteiligen Profilrahmen gehaltert sind, die sich entsprechend dem rasterförmigen Aufbau der Anordnung in Längs- und in Querrichtung erstrecken. Diese Profilrahmen werden vorzugsweise auch dazu verwendet, das Leuchtmittel so aufzunehmen, daß es nach innen bzw. außen hin kein Licht abstrahlen kann, so daß das Leuchtmittel von innerhalb bzw. außerhalb der Wand für den Betrachter nicht sichtbar ist, sondern nur das beleuchtete plattenförmige Element. Beispielhafte Formen für solche einteilige oder mehrteilige Profilrahmen werden später anhand der Ausführungsbeispiele unter Bezugnahme auf die Zeichnungen näher beschrieben.

Die erfindungsgemäße Anordnung sieht vor, dass als Leuchtmittel die von der Stirnseite her Licht in das plattenförmige Element einstrahlen eine Anzahl LED's verwendet wird, die unterschiedliche Lichtfarben aufweisen. Vorzugsweise werden abwechselnd LED's verschiedener Farben in einer Reihe hintereinander angeordnet. Weiter vorzugsweise sind dies jeweils abwechselnd aufeinanderfolgende rote, grüne und blaue LED's. Vorzugsweise kann man diese LED's einzeln oder gruppenweise über eine entsprechende Steuerung ansteuern und ein- bzw. ausschalten und gegebenenfalls dimmen. Die Verwendung verschieden farbiger LED's hat den Vorteil, dass man ein plattenförmiges Element farbig erscheinen lassen kann, die Farbe gegebenenfalls mit der Zeit wechseln kann und außerdem die Helligkeit des in der jeweiligen Farbe ausgestrahlten Lichts ändern kann. Außerdem kann man gleichzeitig verschieden farbige LED's einschalten und damit beliebige Mischfarben erzeugen, die Kombination roter und grüner Leuchtmittel ergibt beispielsweise gelb usw. Durch gleichzeitiges Einschalten einer entsprechenden Anzahl roter, grüner und blauer LED's in gleicher Helligkeitsstärke kann man weißes Licht erzeugen.

Man kann die unterschiedlichen Leuchtmittel dabei so anordnen, dass man eine erste Anzahl Leuchtmittel von einer Stirnseite her in das plattenförmige Element einstrahlen lässt und eine zweite Anzahl Leuchtmittel beispielsweise von der gegenüberliegenden Stirnseite her in das plattenförmige Element einstrahlen lässt. Dabei kann man wiederum die ersten Leuchtmittel so ansteuern, dass von der einen Seite her Licht in einer anderen Farbe in das plattenförmige Element eingestrahlt wird als von der anderen, beispielsweise der gegenüberliegenden Seite.

Vorzugsweise bestehen die plattenförmigen Elemente aus einem Material, welches eine derartige Lichtabsorption, Lichtreflektion und/oder Lichtstreuung hat, dass bei Einstrahlen von der einen Stirnseite her über die ersten Leuchtmittel in das plattenförmige Element hinein das Licht nur über eine Teilstrecke in die Platte eindringt, so dass man bei Verwendung andersfarbiger oder weißer Leuchtmittel und Einstrahlung von der gegenüberliegenden Seite die Platte zweifarbig erscheinen lassen kann.

Eine bevorzugte Weiterbildung der Erfindung sieht vor, dass man neben den ersten Leuchtmitteln und den zweiten Leuchtmitteln, die vorzugsweise von gegenüberliegenden Seiten her in das plattenförmige Element einstrahlen eine dritte Anzahl Leuchtmittel in Form von LED's vorsieht, die von einer dritten Stirnseite des plattenförmigen Elements her Licht in dieses einstrahlen, wobei diese dritte Einstrahlrichtung dann quer zur Einstrahlrichtung der ersten und/oder zweiten Leuchtmittel ausgerichtet ist. Dies ist eine konstruktiv besonders einfache Lösung, wenn man beispielsweise über LED's farbiges Licht erzeugen möchte und wahlweise die Platte in weißem Licht erstrahlen lassen will. Man steuert dann wenn farbige Lichtabgabe gewünscht ist die LED's an, die von der einen Stirnseite her und/oder auch gegebenenfalls von zwei gegenüberliegenden Stirnseiten her farbiges Licht in die Platte einstrahlen. Will man die Platte in weißem Licht erscheinen lassen und gegebenenfalls zur Raumbeleuchtung eine höhere Helligkeit einstellen, dann verwendet man LED's, die von der dritten Stirnseite her weißes Licht in die Platte einstrahlen. Weißes Licht lässt sich aber auch, wie oben bereits erwähnt wurde, durch Kombination verschiedenfarbiger LED's erzeugen. Alternativ dazu können auch weiße LED's für die allgemeine Beleuchtung verwendet werden, insbesondere wenn diese die notwendige Lichtstärke aufweisen.

Wichtig ist bei den vorgenannten Ausführungsvarianten in jedem Fall, dass die Steuerung so ausgelegt ist, dass man die Leuchtmittel einzeln oder in Gruppen ansteuern kann, so dass man nur immer die für die gewünschten Lichtabstrahleffekte notwendigen Leuchtmittel ein- bzw. ausschaltet. Vorzugsweise kann man auch jeweils die Helligkeit einzelner Leuchtmittel stufenlos verändern über die genannte Steuerung.

Man kann auch gegebenenfalls an allen vier Stirnseiten eines plattenförmigen Elements jeweils Leuchtmittel anordnen, in Form von LED's.

Weiterhin ist es möglich, die Anordnung der vorhandenen Leuchtmittel und/oder die jeweilige Ansteuerung dieser Leuchtmittel für jedes plattenförmige Element der Anordnung unterschiedlich auszubilden. Dadurch lassen sich eine Vielzahl optischer Effekte erzeugen, indem man z. B. eines der plattenförmigen Elemente rot erscheinen lässt und das benachbarte blau oder aber auch Mischfarben wie violett, orange verwendet usw. Weiterhin besteht die interessante Möglichkeit einzelne plattenförmige Elemente farbig erscheinen zu lassen gegebenenfalls in unterschiedlichen Farben, um so in erster Linie eine Effektbeleuchtung zu erzielen und andere plattenförmige Elemente wiederum weiß auszuleuchten, gegebenenfalls mit einer größeren Lichtstärke, so dass diese für eine Allgemeinbeleuchtung sorgen. Prinzipiell ist es außerdem möglich, auch eine derartige Gebäudefassade oder Gebäudewand als großdimensionierte Werbefläche einzusetzen, indem man durch Ausleuchten bestimmter Gruppen von plattenförmigen Elementen in bestimmter Anordnung Schriftzeichen, Embleme oder sonstige graphische Darstellungen erzeugt.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung der Ausführungsbeispiele.

Die vorliegende Erfindung wird nachfolgend anhand von Beispielen unter Bezugnahme auf die beiliegenden Zeichnungen näher beschrieben. Dabei zeigen
- Fig. 1: eine Ansicht eines insgesamt vier Felder umfassenden Teilbereichs einer Lichtwand;
- Fig. 2: eine Schnittansicht durch die Lichtwand, gesehen in Richtung der Pfeile II-II von Fig. 1;
- Fig. 3: eine Schnittansicht gesehen in Richtung der Pfeile III-III von Fig. 1, das heißt senkrecht zur Schnittrichtung von Fig. 2;
- Fig. 4: eine Ansicht einer erfindungsgemäßen Lichtfassade gemäß einem Ausführungsbeispiel, wobei bei dieser Variante die Lichtfassade für von außen her einfallendes Licht durchlässig ist.

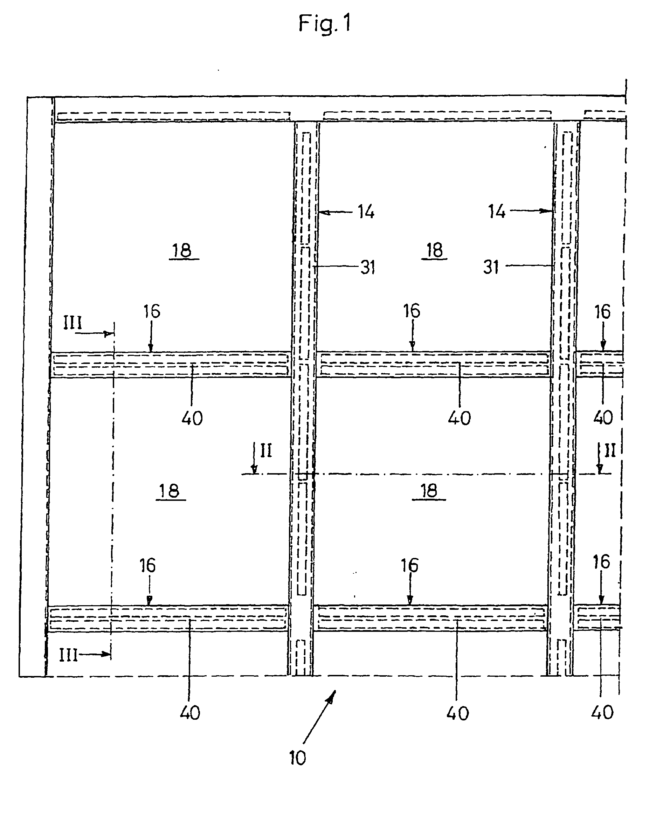

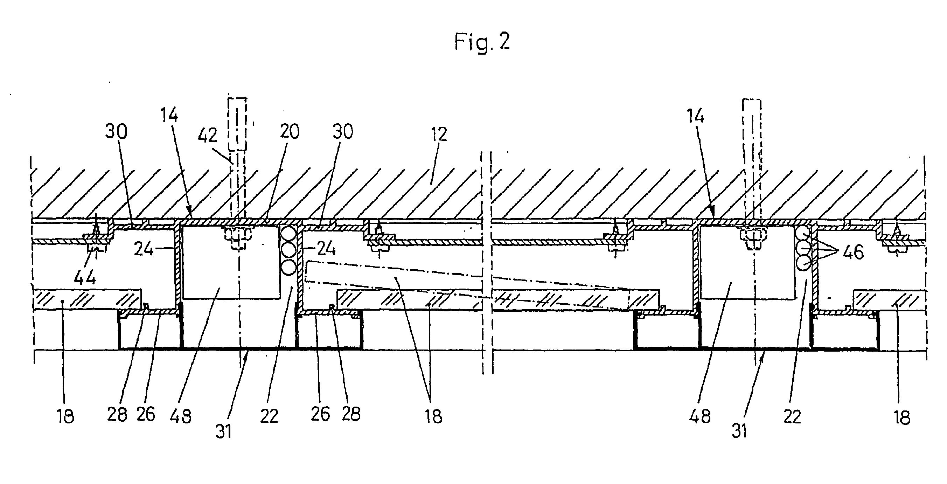

Die in den Fig. 1 bis 3 als erstes Beispiel für ein lichtabstrahlendes Verkleidungssystem dargestellte Lichtwand 10 besteht in ihren lichtabstrahlenden Bereichen aus in relativ geringem Abstand vor der Rohbauwand 12 eines Gebäudes durch ein System von metallischen Halterungsprofilen 14, 16 gehalterten dünnen Platten 18 aus vorzugsweise lichtdurchlässigem Kunststoff, z.B. Acrylglas, PMMA oder dergleichen. Die Halterungsprofile werden von mit Abstand von und parallel zueinander verlaufenden an der zu verkleidenden Gebäudewand befestigbaren Tragprofilen 14 und mit Abstand zwischen benachbarten Tragprofilen 14 anbringbaren Querprofilen 16 gebildet, die ein Rahmenwerk mit einer Vielzahl von zwischen den Halterungsprofilen gelegenen Feldern bilden, welche durch die Platten 18 geschlossen sind. Wie aus Fig. 2 erkennbar ist, sind die im speziellen Fall als Aluminium-Druckgussprofile ausgebildeten Tragprofile 14 als langgestreckte Kanalprofile mit einem im wesentlichen ebenflächigen Befestigungs-Flanschabschnitt 20, zwei mit Abstand von den Rändern des Flanschabschnitts 20 rechtwinklig vortretenden und zwischen sich einen Installationskanal 22 bildenden streifenförmigen Wandabschnitten 24 und jeweils streifenförmigen Platten-Halterungsabschnitten 26 ausgebildet. Auf den Randbereichen der Halterungsabschnitte 26 sind die Ränder der dünnen Platten gehalten, wobei jeweils eine niedrige, von der Flachseite der Halterungsabschnitte 26 vortretende Längsrippe 28 eine Verschiebung der auf den Halterungsabschnitten 26 aufgelagerten Platten 18 verhindert.

Parallel zu den Platten-Halterungsabschnitten 26 in Richtung zum Befestigungs-Flanschabschnitt 20 versetzt sind an den streifenförmigen Wandabschnitten 24 jeweils in die gleiche Richtung wie die Halterungsabschnitte 26 weisende streifenförmige Anschlussabschnitte 30 angesetzt, deren freie Randbereiche im parallelen Abstand von der zu verkleidenden Wand 12 verlaufen. Der Installationskanal 22 ist durch eine auf seine offene Vorderseite aufrastbare Profilabdeckung 31 verschließbar.

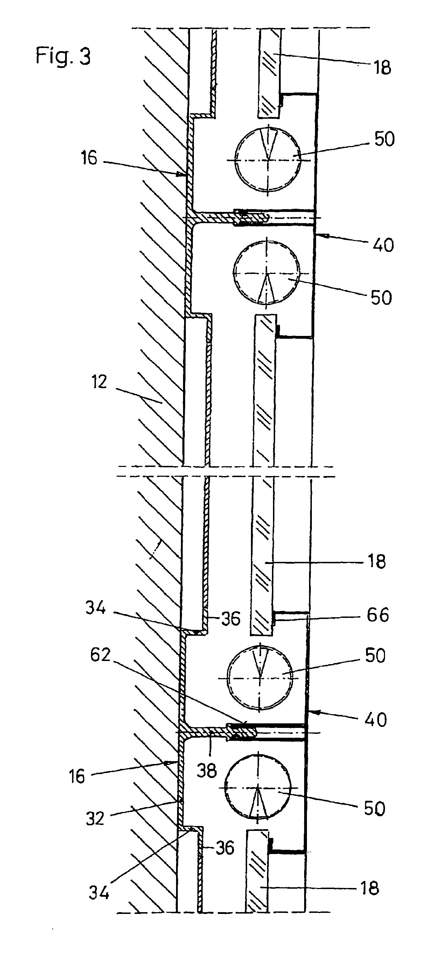

Die in Fig. 3 im Schnitt dargestellten Querprofile 16 weisen ebenfalls einen langgestreckten im wesentlichen ebenen Auflageflanschabschnitt 32 auf, an dessen seitlichen Rändern im wesentlichen rechtwinklig vortretende niedrige streifenförmige Wandabschnitte 34 angesetzt sind, an deren Rändern jeweils in entgegengesetzte Richtung voneinander weg weisende parallel zu den Flanschabschnitten 32 verlaufende Befestigungsabschnitte 36 angesetzt sind, wobei etwa mittig zwischen den streifenförmigen Wandabschnitten ein rechtwinklig vortretender Rippenabschnitt 38 vom Auflage-Flanschabschnitt 32 vortritt, auf dessen freiem Rand jeweils eine Profilabdeckung 40 befestigbar ist. Die Tragprofile können in der in Fig. 2 angedeuteten Weise mit der der Wand zugewandten Fläche des Befestigungs-Flanschabschnittes 20 an der Wand anliegend mit Metalldübeln 42 oder dergleichen befestigt werden.

Dagegen werden die Querprofile 16 jeweils in ihrem Endbereich an benachbarten Tragprofilen 14 befestigt, wofür die streifenförmigen Anschlussabschnitte 30 der Tragprofile 14 und die Befestigungsabschnitte 38 der Querprofile 16 in der bestimmungsgemäßen Montagestellung an der Wand 12 in Bezug auf ihren Abstand von der Wand derart unterschiedlich bemessen sind, daß die Enden der Befestigungsabschnitte der Querprofile in bündiger Übereinanderlage mit den streifenförmigen Anschlussabschnitten der jeweils zugeordneten Tragprofile stehen, so daß die Abschnitte in den übereinanderliegenden Bereichen z.B. durch die in Fig. 2 gezeigten Schrauben 44 miteinander verbunden werden können.

Die von den Tragprofilen 14 und den Querprofilen 16 gebildeten Felder werden dann mit den Platten 18 geschlossen, indem diese in der in Fig. 2 gestrichelt angedeuteten Weise schräg in den oberhalb der Platten-Halterungsabschnitte 26 gebildeten, von den Halterungsprofilen umschlossenen Raum eingeschoben und dann auf der der Wand zugewandten Seite der Platten-Halterungsabschnitte 26 aufgesetzt werden. Durch die Längsrippen 28 werden die Platten 18 in der bestimmungsgemäßen Montagestellung gegen Verschiebung gesichert gehalten. Im vorliegenden Fall, in welchem das Verkleidungssystem vor der Wand 12 eines Gebäudes montiert ist, kann es notwendig sein, die Platten zusätzlich an den Tragprofilen 14 zu befestigen, wofür dann - hier nicht gezeigte - Befestigungsmittel vorgesehen sind, mit denen die auf den Platten-Halterungsabschnitten 26 aufliegenden Bereiche der Platten 18 mit den Halterungsabschnitten 26 verbunden werden können. Hierzu können beispielsweise von der der Wand abgewandten Seite der Platten-Halterungsabschnitte 28 aus betätigbare Klemmverbinder eingesetzt werden.

Die zwischen den Wandabschnitten 24 der Tragprofile gebildeten Installationskanäle 22 stehen für die Verlegung von elektrischen Leitungen 46 und weitere Starter oder Ansteuerorgane z.B. Vorschaltgeräte für in den Querprofilen 16 angeordnete Leuchtstoffröhren 50 zur Verfügung. In Fig. 3 ist die Lage solcher Leuchtstoffröhren 50 schematisch dargestellt, wobei erkennbar ist, daß diese so in den Querprofilen 16 gehaltert sind, daß sie in geringem Abstand parallel zur zugewandten Begrenzungskante der Platte 18 ausgerichtet im Querprofil verlaufend gehalten sind. Die in den Querprofilen vorzusehenden Fassungen für die Leuchtstoffröhren 50 sind dabei nicht dargestellt. Das von den Leuchtstoffröhren 50 abgestrahlte Licht wird also in die benachbarten, die Platten 18 begrenzenden Stirnflächen eingestrahlt und dann über die nach innen weisende Flachseite der Platte in den Raum abgestrahlt, wobei diese Abstrahlung großflächig mit relativ geringer Leuchtdichte erfolgt, so daß eine gleichmäßige Beleuchtung des Raums erhalten wird, ohne daß eine Blendgefahr für die im Raum befindlichen Personen besteht. Durch geeignete Rasterbedruckung der durchsichtigen bzw. lichtdurchlässigen Platten 18 oder auch durch Einlagerung von lichtstreuenden oder reflektierenden Partikeln in die Platte selbst ist die Abstrahlcharakteristik ebenso wie die Transparenz der Platte 18 vorgegebenen Anforderungen anpassbar.

Das System der vor der Wand 12 montierten Tragprofile 14 und Querprofile 16 wird nach der Installation der elektrischen Leitung 46, der Vorschaltgeräte 48 und der Leuchtstoffröhren 50 durch die jeweils zugeordneten Profilabdeckungen 31 bzw. 40 verschlossen. Nach Montage aller Profilabdeckungen 31 und 40 bietet sich dem Betrachter der Lichtwand der Anblick eines Rahmenwerks aus sich rechtwinklig kreuzenden streifenförmigen Rahmenelementen, welche jeweils lichtabstrahlende rechteckige oder quadratische Flächen umschließen.

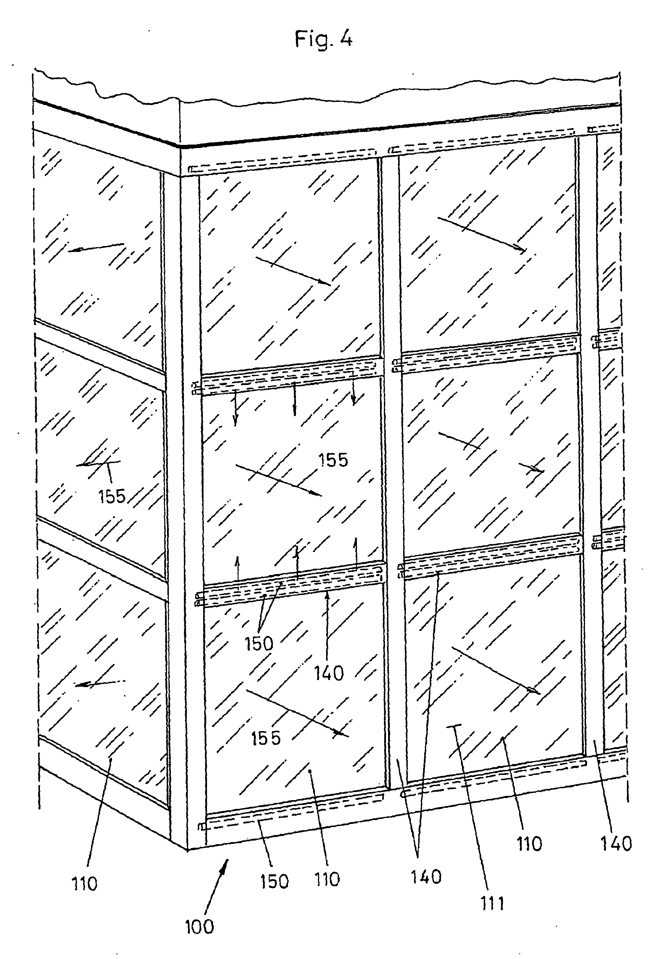

Es wird nun auf Fig. 4 Bezug genommen. Diese Zeichnung zeigt ein Ausführungsbeispiel in schematisch vereinfachter Ansicht, bei der die erfindungsgemäße Anordnung als Lichtwand nicht vor einer festen Gebäudewand angeordnet ist, so daß bei ausgeschaltetem Leuchtmittel von außen her einfallendes Licht in Pfeilrichtung durch die lichtdurchlässigen plattenförmigen Elemente hindurchfallen kann. Dadurch kann Tageslicht oder Kunstlicht aus davor liegenden Räumen oder von außen genutzt werden zur Beleuchtung des hinter der erfindungsgemäßen Anordnung liegenden Raums. Die erfindungsgemäße Anordnung kann auch die Gebäudeaußenwand selbst bilden. Es handelt sich dann um eine tagsüber lichtdurchlässige Gebäudewand, bei der man mit zunehmender Dunkelheit gegebenenfalls sukzessive durch entsprechende Helligkeitssteuerung künstliches Licht seitlich in die plattenförmigen Elemente einstrahlen und nach innen hin abstrahlen kann zur Raumbeleuchtung. Dies hat den besonderen Vorteil, daß der Übergang vom Einschalten des Tageslichts zu dem künstlichen Licht für die in dem Gebäude befindlichen Personen quasi unmerklich geschieht. Die erfindungsgemäßen plattenförmigen Elemente können so ausgebildet sein, daß sie weißes Licht abgeben, sie können aber auch farbiges Licht abgeben, dadurch daß sie entweder entsprechend bedruckt sind oder daß geeignete Leuchtmittel als farbige Lichtquellen verwendet werden. Man könnte auch die plattenförmigen Elemente ganz oder teilweise entsprechend einfärben.

Das erfindungsgemäße Prinzip ist auch anwendbar für eine Gebäudefassade, bei der eine feste Wand, z.B. eine gemauerte Wand oder Betonwand innen liegt und die erfindungsgemäße Anordnung aus den plattenförmigen lichtabgebenden Elementen vor diese feste Wand gesetzt wird. In diesem Fall wird dann nicht Licht nach innen ins Gebäude hinein abgestrahlt, sondern nach außen. In diesem Fall bildet also die erfindungsgemäße Anordnung eine beleuchtbare Gebäudefassade. Dieses Prinzip kann man einmal einsetzen als Außenbeleuchtung für ein Gebäude. Darüber hinaus lassen sich aber auch gestalterische Effekte erzielen, wenn man beispielsweise farbige plattenförmige Elemente gemäß der Erfindung, die auch in sich verschieden farbig sein können bzw. verschiedenfarbiges Licht abgeben können, in eine Gebäudefassade integriert oder eine ganze Gebäudefassade aus diesen aufbaut. Man kann so farbig gegebenenfalls mehrfarbig beleuchtbare Gebäudefassaden schaffen. Dabei besteht neben den architektonisch interessanten Gestaltungseffekten einer farbig beleuchteten Fassade auch die Möglichkeit auf diese Weise Schriften, Firmenembleme oder sonstige Informationen an einer Gebäudefassade unterzubringen.

Die Anordnung aus den plattenförmigen Elementen gemäß der Erfindung ist in Fig. 4 insgesamt mit 100 bezeichnet. Die einzelnen plattenförmigen Elemente der Anordnung sind mit 110 bezeichnet. Man kann in Fig. 4 erkennen, daß die plattenförmigen Elemente 110 rasterartig in Längs- und Querreihen angeordnet sind und daß die plattenförmigen Elemente 110 vorzugsweise in Profilrahmen 140 gehaltert sind. Diese Profilrahmen 140 verlaufen entsprechend in waagerechter und in senkrechter Richtung. Die in einer Richtung verlaufenden Profilrahmen 140 decken das Leuchtmittel, 150 ab. Als Leuchtmittel werden LED's verwendet, die man vorzugsweise in größerer Anzahl einsetzt. Durch die Abdeckung sind die Leuchtmittel 150 von innerhalb des Gebäudes her nicht sichtbar. Die Leuchtmittel 150 strahlen wie bei dem zuvor beschriebenen Ausführungsbeispiel über die Kanten bzw. Stirnseiten das Licht in die plattenförmigen Elemente 110 ein, in denen dann das Licht um 90° umgelenkt und nach innen in das Gebäude hin abgegeben wird, wenn das Leuchtmittel 150 an ist. Wenn das jeweilige Leuchtmittel 150 dagegen ausgeschaltet ist, dann sind die plattenförmigen Elemente 110 von außen nach innen durchlässig, das heißt senkrecht zur Einstrahlrichtung des künstlichen Lichts, welches von den Leuchtmitteln kommt, einstrahlendes Licht, insbesondere Tageslicht kann von außen nach innen durch die plattenförmigen Elemente hindurchtreten. Dieses Tageslicht ist in der Zeichnung Fig. 4 durch Pfeile 155 angedeutet und kann den innenliegenden Raum erhellen. Um einen solchen Durchfall von Tageslicht zu ermöglichen, kann man beispielsweise die innenseitigen Lichtaustrittsflächen 111 der plattenförmigen Elemente 110 in einem Punktraster weiß oder farbig bedrucken, wobei das Punktraster jedoch nicht zu dicht sein sollte und dann einen ausreichenden Lichtdurchtritt des Tageslichts ermöglicht. Andererseits hat das Punktraster bei geeigneter Materialwahl der plattenförmigen Elemente 110, die z.B. aus Acrylglas sein können, die gewünschte Streuwirkung, wenn bei fehlendem Tageslicht nach Einschaltung des Leuchtmittels 150 künstliches Licht seitlich in das plattenförmige Element 110 eingestrahlt, dort um 90° umgelenkt und dann als Streulicht in das innere des Gebäudes bzw. Raumes abgegeben wird.

## Patentansprüche

1. Anordnung von lichtabstrahlenden plattenförmigen Elementen (110)
1.1 bei der wenigstens einem plattenförmigen Element wenigstens ein Leuchtmittel (150) zugeordnet ist,
1.1.1 welches von der Stirnseite her Licht in das plattenförmige Element hinein abstrahlt, wobei
1.1.2 dieses Licht als Streulicht über die Fläche der Platte im rechten Winkel zur Einstrahlrichtung abgegeben wird,
1.2 wobei diese Anordnung mehrere rasterartig in Längs- und Querreihen angeordnete plattenförmige Elemente der genannten Art umfasst
1.3 und diese Anordnung Teil einer Gebäudewand oder Gebäudefassade ist oder eine Gebäudewand oder-Fassade bildet,
1.4 wobei die plattenförmigen Elemente in ein- oder mehrteiligen Profilrahmen (140) gehaltert sind,
1.4.1 die sich entsprechend dem rasterförmigen Aufbau der Anordnung in Längs- und Querrichtung erstrecken,
1.5 wobei wenigstens eines der plattenförmigen Elemente farbiges Licht abgibt,
1.6 wobei als von der Stirnseite des plattenförmigen Elements her einstrahlende Leuchtmittel eine Anzahl LED's vorgesehen ist, die unterschiedliche Lichtfarben - aufweisen, und wobei eine Steuerung vorgesehen ist, mittels derer die LED's einzeln oder gruppenweise ansteuerbar und ein- bzw. ausschaltbar sind,
1.7 dass die Anordnung selbst die Gebäudewand oder-fassade bildet und wenigstens teilweise im Bereich derjenigen plattenförmigen Elemente (110), bei denen das diesen zugeordnete Leuchtmittel ausgeschaltet ist, für von außen eintretendes natürliches Licht und/oder Kunstlicht durchlässig ist.

2. Anordnung von lichtabstrahlenden plattenförmigen Elementen nach Anspruch 1, **dadurch gekennzeichnet, dass** die plattenförmigen Elemente (110) so ausgebildet sind, dass sie weißes Licht oder auch farbiges Licht abgeben und dazu entsprechend bedruckt sind, oder dass geeignete Leuchtmittel als farbige Lichtquellen verwendet werden, oder dass die plattenförmigen Elemente ganz oder teilweise eingefärbt sind.

3. Anordnung von lichtabstrahlenden plattenförmigen Elementen nach einem der Ansprüche 1 oder 2, **dadurch gekennzeichnet, dass** die die Gebäudewand beziehungsweise Gebäudefassade bildende Anordnung (100) eine Einbautiefe von weniger als 10 cm, vorzugsweise weniger als 6 cm aufweist.

4. Anordnung von lichtabstrahlenden plattenförmigen Elementen nach einem der Ansprüche 1 bis 3, **dadurch gekennzeichnet, dass** die plattenförmigen Elemente (110) im wesentlichen Acrylplatten sind, die aus einem opaken Material bestehen oder an der lichtabgebenden Seite mit einem Punktraster bedruckt sind.

5. Anordnung von lichtabstrahlenden plattenförmigen Elementen nach einem der Ansprüche 1 bis 4, **dadurch gekennzeichnet, dass** als Leuchtmittel wenigstens eine in die Stirnseite des plattenförmigen Elements einstrahlende Anzahl LED's vorgesehen ist, wobei abwechselnd LED's verschiedener Farben in einer Reihe hintereinander angeordnet sind, vorzugsweise jeweils abwechselnd aufeinanderfolgend rote, grüne und blaue LED's.

6. Anordnung von lichtabstrahlenden plattenförmigen Elementen nach einem der Ansprüche 1 bis 5, **dadurch gekennzeichnet, dass** das Leuchtmittel (150) durch Profilrahmen (140) der Halterung zum Raum hin, zum Gebäudeinneren und/oder nach außerhalb des Gebäudes hin abgedeckt ist.

7. Anordnung von lichtabstrahlenden plattenförmigen Elementen nach Anspruch 1, **dadurch gekennzeichnet, dass** die plattenförmigen Elemente an der lichtabgebenden Seite mit einem Punktraster bedruckt sind.

8. Anordnung von lichtabstrahlenden plattenförmigen Elementen nach einem der Ansprüche 1 bis 7, **dadurch gekennzeichnet, dass** eine Anzahl erster Leuchtmittel in Form von LED's vorgesehen ist, die von einer Stirnseite her Licht in das plattenförmige Element einstrahlen, und dass eine zweite Anzahl Leuchtmittel in Form von LED's vorgesehen ist, die Licht von der der ersten Anzahl Leuchtmittel gegenüberliegenden Stirnseite her in das plattenförmige Element einstrahlen, wobei eine Steuerung vorgesehen ist, mittels derer die genannten ersten und zweiten Leuchtmittel jeweils einzeln oder gruppenweise ansteuerbar sind.

9. Anordnung von lichtabstrahlenden plattenförmigen Elementen nach einem der vorhergehenden Ansprüche, **dadurch gekennzeichnet, dass** die plattenförmigen Elemente aus einem derartigen Material bestehen bzw. an der lichtabgebenden Seite derartig bedruckt sind, dass aufgrund von Lichtabsorption, Lichtreflexion und/oder Lichtstreuung von der einen Stirnseite her über erste Leuchtmittel eingestrahltes Licht das plattenförmige Element nur etwa bis zur Plattenmitte in weißem oder farbigem Licht erscheinen lässt.

10. Anordnung von lichtabstrahlenden plattenförmigen Elementen nach einem der vorhergehenden Ansprüche, **dadurch gekennzeichnet, dass** eine dritte Anzahl Leuchtmittel in Form von LED's vorgesehen ist, die von einer dritten Stirnseite her Licht in das plattenförmige Element einstrahlen, wobei die Einstrahlrichtung quer zur Einstrahlrichtung der ersten und/oder zweiten Leuchtmittel erfolgt.

11. Anordnung von lichtabstrahlenden plattenförmigen Elementen nach einem der vorhergehenden Ansprüche, **dadurch gekennzeichnet, dass** die Leuchtmittel so ansteuerbar sind, dass von wenigstens einer Stirnseite her weißes Licht in ein plattenförmiges Element einstrahlbar ist und von wenigstens einer quer zu der ersten Stirnseite verlaufenden zweiten Stirnseite her farbiges Licht in das plattenförmige Element einstrahlbar ist.

12. Anordnung von lichtabstrahlenden plattenförmigen Elementen nach einem der vorhergehenden Ansprüche, **dadurch gekennzeichnet, dass** an allen vier Stirnseiten eines plattenförmigen Elements Leuchtmittel in Form von LED's angeordnet sind, die jeweils über eine Steuerung einzeln separat oder in Gruppen ansteuerbar und ein- oder ausschaltbar oder in ihrer Helligkeit veränderbar (dimmbar) sind.

13. Anordnung von lichtabstrahlenden plattenförmigen Elementen nach einem der vorhergehenden Ansprüche, **dadurch gekennzeichnet, dass** an einer oder mehreren Stirnseiten des plattenförmigen Elements eine Anzahl von LED's in den Lichtfarben rot, grün und blau angeordnet sind, die über eine Steuerung gleichzeitig so
ansteuerbar sind, dass sie insgesamt weißes Licht in das plattenförmige Element einstrahlen.

## Claims

1. An arrangement of light-emitting plate-shaped elements (110)
1.1 where at least at least one plate-shaped element has at least one illuminant (150) associated with it,
1.1.1 which emits light from the face into the plate-shaped element, wherein
1.1.2 this light is emitted as scattered light over the surface of the plate at right angles to the direction of irradiation,
1.2 wherein this arrangement comprises several plate-shaped elements of the kind mentioned, which are arranged in longitudinal and transverse rows in the manner of a grid,
1.3 and this arrangement is part of a building wall or building façade or forms a building wall or building façade,
1.4 wherein the plate-shaped elements are mounted in one-piece or multi-piece profile frames (140),
1.4.1 which extend in longitudinal and transverse direction corresponding to the grid-like structure,
1.5 wherein at least one of the plate-shaped elements emits coloured light,
1.6 wherein a number of LEDs representing illuminants irradiating light from the face of the plate-shaped element are provided, which comprise different light colours, and wherein a control is provided by means of which the LEDs can be controlled individually or in groups and can be switched on or off,
1.7 that the arrangement itself forms the building wall or building façade and is permeable to natural light and/or artificial light entering from outside at least partially in the area of those plate-shaped elements (110), for which the respectively associated illuminant is switched off.

2. The arrangement of light-emitting plate-shaped elements according to claim 1, **characterised in that** the plate-shaped elements (110) are configured such that they give off white light or coloured light and for this purpose are printed accordingly, or **in that** suitable illuminants are used as coloured light sources or **in that** the plate-shaped elements are wholly or partially dyed.

3. The arrangement of light-emitting plate-shaped elements according to one of claims 1 or 2, **characterised in that** the arrangement (100) forming the building wall or building façade has a mounting depth of less than 10 cm, preferably less than 6 cm.

4. The arrangement of light-emitting plate-shaped elements according to one of claims 1 to 3, **characterised in that** the plate-shaped elements (110) are essentially acrylic plates which consist of an opaque material, or **in that** they have, on the light-emitting side, a dot matrix printed on it.

5. The arrangement of light-emitting plate-shaped elements according to one of claims 1 to 4, **characterised in that** a number of LEDs representing illuminants irradiating light into the face of the plate-shaped element are provided, wherein alternatingly LEDs of different colours are arranged in a row one behind the other, preferably red, green and blue LEDs following each other in rotation.

6. The arrangement of light-emitting plate-shaped elements according to one of claims 1 to 5, **characterised in that** the illuminant (150) is covered by profile frames (140) of the mount, towards the room, the interior of the building and/or towards the outside of the building.

7. The arrangement of light-emitting plate-shaped elements according to claim 1, **characterised in that** the plate-shaped elements are printed with a dot matrix on the light-emitting side.

8. The arrangement of light-emitting plate-shaped elements according to one of claims 1 to 7, **characterised in that** a number of first illuminants in the form of LEDs is provided, which irradiate light from a face into the plate-shaped element, and that a second number of illuminants in the form of LEDs is provided, which irradiate light into the plate-shaped element from the face opposite the face of the first number of illuminants, wherein a control is provided, by means of which the said first and second illuminants can be controlled individually or in groups, respectively.

9. The arrangement of light-emitting plate-shaped elements according to one of the preceding claims, **characterised in that** the plate-shaped elements consist of such a material, or are printed on the light-emitting side such that light irradiated due to light absorption, light reflection and/or light scattering via first illuminants from the one face, causes the plate-shaped element to appear in white or coloured light only as far as approximately the middle of the plate.

10. The arrangement of light-emitting plate-shaped elements according to one of the preceding claims, **characterised in that** a third number of illuminants in the form of LEDs is provided, which irradiate light into the plate-shaped element from a third face, wherein the direction of irradiation runs transversely to the direction of irradiation of the first and/or second illuminants.

11. The arrangement of light-emitting plate-shaped elements according to one of the preceding claims, **characterised in that** the illuminants can be controlled such that white light can be irradiated into a plate-shaped element from at least one face, and that coloured light can be radiated into the plate-shaped element from at least a second face extending transversely to the first face.

12. The arrangement of light-emitting plate-shaped elements according to one of the preceding claims, **characterised in that** illuminants in the form of LEDs are arranged on all four faces of a plate-shaped element, which, respectively, can be controlled via a control separately individually or in groups and can be switched on or off or which can be varied (dimmed) as regards their brightness.

13. The arrangement of light-emitting plate-shaped elements according to one of the preceding claims, **characterised in that** a number of LEDs are arranged on one or more faces of the plate-shaped element in red, green and blue light colours, which can be simultaneously controlled via a control in such a way that in total they irradiate white light into the plate-shaped element.

## Revendications

1. Ensemble d'éléments émetteurs de lumière, en forme de plaques (110),
1.1 dans lequel on associe, à au moins un élément en forme de plaque, au moins un moyen d'éclairage (150),
1.1.2 lequel émet de la lumière, à partir de la face frontale, jusqu'à l'intérieur de l'élément en forme de plaque, dans lequel
1.1.2 cette lumière est émise en tant que lumière diffuse sur la surface de la plaque, en angle droit par rapport au sens d'irradiation,
1.2 dans lequel cet ensemble comprend plusieurs éléments en forme de plaques du genre mentionné, disposés en rangées longitudinales et transversales à la manière d'un quadrillage
1.3 et cet ensemble étant une partie d'un mur de bâtiment ou d'une façade de bâtiment ou bien formant un mur ou une façade d'un bâtiment,
1.4 dans lequel les éléments en forme de plaques sont maintenus dans des cadres profilés (140) d'une seule pièce ou en plusieurs pièces,
1.4.1 lesquels s'étendent dans le sens longitudinal et transversal de manière correspondante à la structure en forme de quadrillage de l'ensemble,
1.5 dans lequel au moins l'un des éléments en forme de plaques émet de la lumière colorée,
1.6 dans lequel on prévoit, en tant que moyens d'éclairage irradiant à partir de la face frontale de l'élément en forme de plaque, un certain nombre de DEL présentant des couleurs lumineuses différentes, et dans lequel on prévoit une commande au moyen de laquelle les DEL peuvent être activées et désactivées individuellement ou par groupes,
1.7 l'ensemble en tant que tel formant le mur ou la façade du bâtiment et laissant passer au moins partiellement de la lumière naturelle entrant depuis l'extérieur et/ou de la lumière artificielle dans la zone de ceux des éléments en forme de plaques (110) pour lesquels le moyen d'éclairage qui leur est associé est éteint.

2. Ensemble d'éléments émetteurs de lumière, en forme de plaques selon la revendication 1, **caractérisé en ce que** les éléments en forme de plaques (110) sont réalisés de manière à émettre de la lumière blanche ou bien également de la lumière colorée et sont imprimés de manière correspondante à cet effet, ou bien **en ce que** des moyens d'éclairage adéquats sont utilisés en tant que sources lumineuses colorées, ou bien **en ce que** les éléments en forme de plaques sont entièrement ou partiellement teintés.

3. Ensemble d'éléments émetteurs de lumière, en forme de plaques selon l'une des revendications 1 ou 2, **caractérisé en ce que** l'ensemble (100) formant le mur de bâtiment ou la façade de bâtiment présente une profondeur d'encastrement de moins de 10 cm, de préférence de moins de 6 cm.

4. Ensemble d'éléments émetteurs de lumière, en forme de plaques selon l'une des revendications 1 à 3, **caractérisé en ce que** les éléments en forme de plaques (110) sont sensiblement des plaques en acrylique se composant d'un matériau opaque ou bien sur lesquelles une matrice de points est imprimée sur la face d'émission de lumière.

5. Ensemble d'éléments émetteurs de lumière, en forme de plaques selon l'une des revendications 1 à 4, **caractérisé en ce que** l'on prévoit, en guise de moyen d'éclairage, au moins un certain nombre de DEL irradiant dans la face frontale de l'élément en forme de plaque, des DEL de différentes couleurs étant disposées en alternance les unes derrière les autres sur une rangée, de préférence des DEL rouges, vertes et bleues se suivant respectivement en alternance.

6. Ensemble d'éléments émetteurs de lumière, en forme de plaques, selon l'une des revendications 1 à 5, **caractérisé en ce que** le moyen d'éclairage (150) est recouvert, par des cadres profilés (140) de la fixation, vers la pièce, vers l'intérieur de la pièce et/ou vers l'extérieur du bâtiment.

7. Ensemble d'éléments émetteurs de lumière, en forme de plaques, selon la revendication 1, **caractérisé en ce qu'**une matrice de points est imprimée sur la face émettrice de lumière des éléments en forme de plaques.

8. Ensemble d'éléments émetteurs de lumière, en forme de plaques, selon l'une des revendications 1 à 7, **caractérisé en ce que** l'on prévoit un certain nombre de premiers moyens d'éclairage sous la forme de DEL, lesquels irradient de la lumière, à partir de la face frontale, dans l'élément en forme de plaque, et **en ce que** l'on prévoit un deuxième nombre de moyens d'éclairage sous la forme de DEL qui irradient de la lumière, à partir de la face frontale située en vis-à-vis du premier nombre de moyens d'éclairage, dans l'élément en forme de plaque, dans lequel on prévoit une commande au moyen de laquelle les premiers et deuxièmes moyens d'éclairage mentionnés peuvent être respectivement commandés individuellement ou par groupes.

9. Ensemble d'éléments émetteurs de lumière, en forme de plaques, selon l'une des revendications précédentes, **caractérisé en ce que** les éléments en forme de plaques se composent d'un matériau d'un genre tel, ou sont imprimés sur la face d'émission de lumière d'une manière telle, qu'en raison de l'absorption de la lumière, de la réflexion de la lumière et/ou de la diffusion de lumière à partir de cette face frontale, de la lumière irradiant via des premiers moyens d'éclairage fait apparaître l'élément en forme de plaque, seulement à peu près jusqu'au milieu de la plaque, dans une lumière blanche ou colorée.

10. Ensemble d'éléments émetteurs de lumière, en forme de plaques, selon l'une des revendications précédentes, **caractérisé en ce que** l'on prévoit un troisième nombre de moyens d'éclairage sous la forme de DEL qui irradient de la lumière, à partir d'une troisième face frontale, dans l'élément en forme de plaque, dans lequel le sens d'irradiation s'effectue transversalement au sens d'irradiation des premiers et/ou deuxièmes moyens d'éclairage.

11. Ensemble d'éléments émetteurs de lumière, en forme de plaques, selon l'une des revendications précédentes, **caractérisé en ce que** les moyens d'éclairage peuvent être commandés de manière à ce qu'il soit possible de faire irradier de la lumière blanche, à partir d'une face frontale, dans un élément en forme de plaque et qu'il soit possible de faire irradier de la lumière colorée dans l'élément en forme de plaque au moins à partir d'une deuxième face frontale s'étendant transversalement à la première face frontale.

12. Ensemble d'éléments émetteurs de lumière, en forme de plaques, selon l'une des revendications précédentes, **caractérisé en ce que** des moyens d'éclairage sous forme de DEL sont disposés sur l'ensemble des quatre faces frontales d'un élément en forme de plaque, lesquelles DEL peuvent être commandées, respectivement via une commande, de manière séparée individuellement ou par groupes et peuvent être activées ou désactivées ou bien modifiées concernant leur luminosité (régulées).

13. Ensemble d'éléments émetteurs de lumière en forme de plaques selon l'une des revendications précédentes, **caractérisé en ce qu'**un certain nombre de DEL aux couleurs lumineuses rouge, verte et bleue sont disposées sur une ou plusieurs faces frontales de l'élément en forme de plaque, lesquelles DEL peuvent être commandées simultanément via une commande de manière à faire irradier de la lumière globalement blanche dans l'élément en forme de plaque.
